Europäisches Patentamt

European Patent Office

Office européen des brevets

(19)

(11) Veröffentlichungsnummer: **0 058 865**
A2

(12) **EUROPÄISCHE PATENTANMELDUNG**

(21) Anmeldenummer: 82100897.6

(22) Anmeldetag: 08.02.82

(51) Int. Cl.³: **C 09 B 67/20,** C 09 B 67/08, C 09 C 3/10, C 09 D 17/00

(30) Priorität: 20.02.81 DE 3106357

(43) Veröffentlichungstag der Anmeldung: 01.09.82
**Patentblatt 82/35**

(84) Benannte Vertragsstaaten: **CH DE FR GB IT LI**

(71) Anmelder: **BAYER AG, Zentralbereich Patente, Marken und Lizenzen, D-5090 Leverkusen 1, Bayerwerk (DE)**

(72) Erfinder: **Perrey, Hermann, Dr., Auf der Rheinaue 8, D-4150 Krefeld 11 (DE)**
Erfinder: **Lorenz, Manfred, Dr., Roggendorfstrasse 51, D-5000 Köln 80 (DE)**
Erfinder: **Bornatsch, Wolfgang, Dr., Baldurstrasse 21, D-5000 Köln 91 (DE)**

(54) Verfahren zur Herstellung von Polymer-Pigment-Präparationen und ihre Verwendung.

(57) Verfahren zur Herstellung von Polymer-Pigment-Präparationen, dadurch gekennzeichnet, daß man die alkalische bis schwach saure, wäßrige Suspension eines Pigments in Gegenwart eines oder mehrerer saure Gruppen enthaltender, synthetischer Polymerisate und in Gegenwart von etwa 1 bis etwa 10 Gew.-%, bezogen auf das Pigmentgewicht, einer oder mehrerer anionischer oberflächenaktiver Verbindungen bei Temperaturen von etwa 20 bis etwa 130 °C behandelt und durch Zugabe von Salzen 2- oder 3-wertiger Metalle und gegebenenfalls weiterer Elektrolyte, das Polymerisat und das Dispergiermittel fällt.

EP 0 058 865 A2

ACTORUM AG

0058865

BAYER AKTIENGESELLSCHAFT    5090 Leverkusen, Bayerwerk
Zentralbereich
Patente, Marken und Lizenzen    PG/kl-c

Verfahren zur Herstellung von Polymer-Pigment-Präparationen und ihre Verwendung

Die vorliegende Erfindung betrifft ein Verfahren zur Herstellung von Polymer-Pigment-Präparationen in Gegenwart von saure Gruppen enthaltenden synthetischen Polymerisaten und in Gegenwart von anionischen oberflächenaktiven Verbindungen.

Dispergiermittelfreie Verfahren zur Herstellung von Polymer-Pigment-Präparationen sind z.B. aus der DE-OS 27 29 892, der DE-OS 27 38 511 und der DE-OS 20 19 203 sowie der darin zitierten Literatur bekannt. Diese Verfahren haben jedoch den Nachteil, daß neben energie- und zeitaufwenigen Polymerapplikationsmethoden wie Kneter oder Perlmühle die Endfarbstärke bei Einarbeitung der so erhaltenen Präparate etwa in eine Polyvinylacetatpaste nicht derjenigen entspricht, die mit wäßrigen Feinteigen erhalten werden, die auf konventionellem Weg durch Perlmahlung in Gegenwart größerer Mengen oberflächenaktiver Verbindungen hergestellt wurden.

Le A 20 823-Ausland

0058865

Aus der US-PS 4 166 811 ist ein Verfahren zur Polymerbelegung von Pigmenten bekannt, in dem ein alkalisch gelöstes, carboxylgruppentragendes Polymerisat in eine alkalische Suspension des Pigments gegeben wird, sauer gestellt wird, um das Polymer auszufällen, und anschließend aufgeheizt wird. Diese Reihenfolge der Verfahrensschritte führt jedoch nicht zu farbstarken Produkten, da beim Nachheizen die Deflokkulation des Pigments durch das ausgefällte Polymer behindert wird.

Aus der DE-OS 25 47 539 ist die Darstellung von Pigment-Kompositionen bekannt, die einen Komplex aus einer oder mehreren nichtionischen, oberflächenaktiven Polyetherverbindungen auf Basis Ethylenoxid und einer polymeren Carbonsäure mit einem Molekulargewicht von mindestens 1500 enthalten. Da bei diesen Pigment-Kompositionen relativ große Mengen an nichtionischem Dispergiermittel (10 - 25 %, bezogen auf trockenes, unbelegtes Pigment) eingesetzt werden, neigen die Pigmentpartikel beim Trocknen zum Zusammenbacken. Dies führt beim Einrühren, z.B. in Emulsionsfarben, zu einer schlechten Dispergierbarkeit.

Das erfindungsgemäße Verfahren zur Herstellung von Polymer-Pigment-Präparationen ist dadurch gekennzeichnet, daß man die alkalische bis schwach saure wäßrige Suspension eines Pigments in Gegenwart eines oder mehrerer saure Gruppen enthaltender, synthetischer Polymerisate und in Gegenwart von etwa 1 bis etwa 10 Gew.-%,

Le A 20 823

vorzugsweise 2 - 10 Gew.-% bezogen auf das Pigmentgewicht, eines oder mehrerer anionischer oberflächenaktiver Verbindungen bei Temperaturen von etwa 20 bis etwa 130°C behandelt und durch Zugabe von Salzen 2- oder 3-wertiger Metalle und gegebenenfalls weiterer Elektrolyte, das Polymerisat und das Dispergiermittel fällt. Die nach diesem Verfahren hergestellten Präparationen sind farbstark und gut dispergierbar. Die Fällung des anionischen Dispergiermittels kann vor, nach oder gleichzeitig mit der Polymerfällung erfolgen.

Vorzugsweise wird das Verfahren in der Weise ausgeführt, daß man das Polymerisat durch Zugabe eines Elektrolyten vorzugsweise einer Säure ausfällt und vor oder nach der Polymerfällung die anionische oberflächenaktive Verbindung durch Salze 2- oder 3-wertiger Metalle fällt.

Die Polymer-Pigment-Präparationen werden in üblicher Weise isoliert, z.B. durch Abtrennen des Koagulats und Trocknung bei 10 bis 300°C, vorzugsweise 50 bis 100°C oder ohne vorherige Abtrennung durch Sprühtrocknung.

Geeignete Pigmente sind anorganische Pigmente wie Titandioxid, Chrom- und Eisenoxide, Cadmiumpigmente auf Sulfid- und Sulfid-/Selenoxid-Basis, Mischphasenpigmente vom Rutil- und Spinell-Typ, Ruß-Pigmente sowie

Le A 20 823

organische Pigmente aller Pigmentklassen, beispielsweise Kupferphthalocyaninpigmente, Chinacridonpigmente, Diarylgelbpigmente, Dioxazinpigmente, Anthrachinonpigmente, Thioindigopigmente, Naphthalintetracarbonsäurepigmente, Perylentetracarbonsäurepigmente und Azopigmente der Mono- und Disazoreihe, insbesondere solche mit Acetessigsäurearylamiden, ß-Oxynaphthoesäurearylamiden oder verlackten ß-Oxynaphthoesäuren als Kupplungskomponenten.

Bevorzugt eingesetzt werden Arylamidpigmente vom Mono- und Bis-azo-Typ, Pyrazolon-Pigmente vom Mono- und Bis-azo-Typ, Naphtol AS-Pigmente, Phthalocyaninpigmente sowie Ruß.

Geeignete, saure funktionelle Gruppen enthaltende Polymerisate sind in wäßrig-alkalischen Medien, gegebenenfalls unter Zuhilfenahme von organischen Lösungsmitteln lösliche, in wäßrig sauren Medien bzw. in wäßrigen, mehrwertige Kationen enthaltenden Medien bzw. in wäßrig sauren, mehrwertige Kationen enthaltenden Medien unlösliche Polymerisate, die durch vinylische Polymerisation herstellbar sind und Carboxyl- bzw. Carboxylat- und/oder Sulfonsäure- bzw. Sulfonat- und/oder Sulfatyl- bzw. Sulfatgruppen im Molekül enthalten.

Bei den erfindungsgemäß einsetzbaren Polymerisaten werden die sauren Gruppen vorzugsweise durch den Einbau entsprechender Vinylmonomere, beispielsweise ungesättigter Carbonsäuren wie Acrylsäure, Methacrylsäure,

Le A 20 823

Crotonsäure und/oder ungesättigter Polycarbonsäuren wie Maleinsäure, Fumarsäure, Itaconsäure bzw. der entsprechenden Anhydride, Halbester, Alkali- oder Ammoniumsalze und/oder vinylischer Sulfonsäuren bzw. vinylischer Schwefelsäurehalbestern wie Vinylsulfonsäure, Styrylsulfonsäure, Acryl- und Methacrylpropansulfonsäure, die Schwefelsäurehalbester von Hydroxyethylacrylat, Hydroxymethacrylat, Hydroxypropylmethacrylat und Hydroxypropylacrylat bzw. deren Alkali- oder Ammoniumsalze eingeführt. Bevorzugt sind Acrylsäure, Methacrylsäure und Maleinsäureanhydrid, Vinylsulfonsäure, Styrylsulfonsäure bzw. deren Alkali- oder Ammoniumsalze. Bevorzugte Polymerisate sind Copolymerisate der genannten, saure Gruppen enthaltenden Vinylverbindungen mit anderen Vinylmonomeren, die keine saure Gruppe tragen wie Diene, z.B. Butadien-1,3 und 2-Methylbutadien-1,3, Styrol, ∝-Methylstyrol, Acrylate und Methacrylate wie Methyl-, Ethyl- und Butylacrylat, bzw. -methacrylat, Acrylamid, Methacrylamid, Acrylnitril, Methacrylnitril, Vinylester wie Vinylacetat und Vinylpropionat, Vinylether wie Methyl-, Ethyl- und Isobutylvinylether und N-Vinylpyrrolidon.

Solche Copolymerisate sind durch übliche vinylische Copolymerisationen, also in einer Stufe erhältlich. Es sind aber auch mehrstufige Herstellungsverfahren möglich, z.B. Polymerisation von Butadien zu einem niedrigmolekularen Polybutadien mit anschließender Addition von Maleinsäure.

Le A 20 823

In dem erfindungsgemäßen Verfahren werden bevorzugt Polymerisate eingesetzt, die Copolymerisate mit mindestens einem Monomer aus der Reihe Acrylsäure, Methacrylsäure, Vinylsulfonsäure, Styrylsulfonsäure, Maleinsäure, Maleinsäureanhydrid bzw. Halbester der Maleinsäure mit Monoalkoholen darstellen. Diese sind vorzugsweise mit mindestens einem Monomer aus der Reihe Acrylnitril, Styrol, Butadien, Acrylat, Methacrylat copolymerisiert.

Besonders bevorzugt sind Terpolymerisate aus einem sauren Monomer, Acrylnitril oder Styrol und Butadien oder einem Acrylat bzw. Methacrylat. Ganz besonders bevorzugt sind die Polymerisate mit folgender Zusammensetzung:

Polymerisat 1: 43 % Butylacrylat, 17 % Acrylnitril, 40 % Methacrylsäure

Polymerisat 2: 43 % Butylacrylat, 17 % Acrylnitril, 40 % Acrylsäure

Polymerisat 3: 33 % Butylacrylat, 50 % Methacrylsäure, 17 % Styrol

Polymerisat 4: 43 % Butadien, 17 % Acrylnitril, 40 % Methacrylsäure

Polymerisat 5: 43 % Butylacrylat, 20 % Methacrylsäure, 37 % Acrylnitril

Die erfindungsgemäß einsetzbaren Polymerisate sind nach verschiedenen Methoden herstellbar und werden beispielsweise durch Emulsionspolymerisation üblicherweise unter Einsatz von Molekulargewichtsreglern,

Le A 20 823

als Latices oder durch Lösungspolymerisation als wäßrig-alkalische Lösung erhalten.

Vorzugsweise werden Lösungen der Polymerisate eingesetzt, die durch Auflösen entsprechender Latices in
wäßrig-alkalischen Medien erhalten werden.

Der Feststoffgehalt der eingesetzten Latices oder Polymerlösungen kann in weiten Grenzen schwanken. Im
allgemeinen liegt er bei den Latices zwischen 10 und
70 Gew.-%, bei den Polymerlösungen zwischen 1 und 50
Gew.-%. Die Latexteilchengröße ist in der Regel uneinheitlich und liegt zwischen etwa 0,1 und 0,35 µm. Es
können aber auch Dispersionen mit Teilchengrößen unter 0,1 µm eingesetzt werden. Die nach diskontinuierlichen oder kontinuierlichen Verfahren erhältlichen
Latices werden entweder emulgatorfrei oder unter Verwendung ionischer, speziell anionenaktiver Emulgatoren hergestellt. Die mittleren Molekulargewichte besonders geeigneter Polymere liegen im allgemeinen im
Bereich zwischen 1000 und mehreren Millionen. Der Bereich von etwa 1500 bis zu 500 000 ist bevorzugt. Besonders bevorzugt ist der Bereich von etwa 3000 bis
150 000.

Die Polymerisate weisen vorzugsweise eine Säurezahl
von etwa 40 bis 500, vorzugsweise 100 bis 400 auf.

Beim erfindungsgemäßen Herstellungsverfahren ist für
eine gute Durchmischung der Komponenten so sorgen. Diese

Le A 20 823

erfolgt mittels herkömmlicher Rührwerke oder vorzugsweise mit intensiv wirkenden Mischaggregaten, beispielsweise mit Mischern nach dem Rotor-Stator-Prinzip (z.B.
Ultra-Turrax), Schnellrührern wie Dissolvern und Dispersern.

Bei der Herstellung der wäßrigen Pigmentsuspensionen
kann man die nach der Synthese erhaltene wäßrige oder
wäßrig/organische Suspension einsetzen oder von trockenen Pulverpigmenten ausgehen; es ist jedoch oft vorteilhafter, wasserhaltige Pigmentpasten oder Pigmentpreßkuchen einzusetzen. Die geeigneten Pigmentkonzentrationen dieser wäßrigen Suspensionen können in weiten Grenzen schwanken. Als praxisgerecht haben sich
Konzentrationen zwischen 5 und 35 Gew.-% Pigment erwiesen. Bei Einsatz von Dissolvern ist es vorteilhaft,
anfangs höhere Pigmentkonzentrationen bis etwa 60
Gew.-% zur Einstellung pastöser Konsistenzen zu wählen,
um einen besseren Mischeffekt zu erzielen.

Die Reihenfolge der Zugabe ist nicht kritisch; jedoch
hat es sich als vorteilhaft erwiesen, die Pigmentsuspension vorzulegen und das Polymerisat vorzugsweise
als Latex oder als Lösung zulaufen zu lassen.

Die zur optimalen Belegung nötige Menge an Polymerisat ist abhängig vom eingesetzten Pigment. Vorzugsweise werden 5 bis 40 Gew.-%, bezogen auf das Pigmentgewicht, besonders bevorzugt 10 bis 20 Gew.-% eingesetzt.

Le A 20 823

Geeignete anionische, oberflächenaktive Verbindungen sind in K. Lindner, Tenside-Textilhilfsmittel-Waschrohstoffe, 2. Auflage, Wiss. Verlagsgesellschaft, Stuttgart, 1964, Band. I, S. 571 - 836, oder in Ullmanns Encyklopädie der technischen Chemie, 4. Auflage, Verlag Chemie, Weinheim/Bergstr., 1975, Band 10, S. 457 - 458, beschrieben.

Besonders geeignet sind solche, die aus den folgenden Stoffklassen stammen:

Fettsäuresalze, -sulfate, Sulfate von Fettsäureestern und -amiden, Alkylsulfate, Sulfate von alkoxylierten Alkoholen, Sulfate von acylierten Alkanolaminen, langkettige Alkylsulfonate ($C_6$-$C_{20}$), Fettsäureestersulfonate, Fettsäureamidsulfonate, Sulfobernsteinsäureester und -amide, ($C_6$-$C_{20}$-Alkyl)-acyltauride, perfluorierte Alkylsulfonate, Alkylbenzolsulfonate (z.B. vom Typ "Marlon"), Alkylnaphthalinsulfonate, Arylethersulfonate, Alkylbenzimidazolsulfonate, Alkoxycarboxylate, Alkylmalonsäuresalze, Alkylbernsteinsäuresalze, Seifen.

Ganz besonders bevorzugt sind:
Ölsäure-diethylaminsalz, Palmitinsulfonat, $C_{15}$-n-Alkylsulfonat, $C_{12}$-$C_{14}$-Alkylsulfonat, Di-Natrium-N-octadecylsulfosuccinamat, Tetra-Natrium-N-(1,2-dicarboxylethyl)-N-octadecylethylsulfosuccinamat, Natriumdicyclohexylsulfosuccinat, Di-Natrium-isodecylsulfosuccinat, Natrium-diamylsulfosuccinat, Natrium-dioctyl-

Le A 20 823

sulfosuccinat, Natrium-dihexylsulfosuccinat, Dibutyl-naphthalinsulfonat, n-Dodecylbenzolsulfonat, Dioctyl-glycerinethersulfat, Oleylalkoholsulfat.

Vorzugsweise werden beim erfindungsgemäßen Verfahren etwa 2 bis etwa 10 Gew.-%, bezogen auf das Pigmentgewicht, einer oder mehrerer anionischer oberflächenaktiver Verbindungen zugesetzt.

Folgende Arbeitsweisen haben sich bei der Durchführung des erfindungsgemäßen Verfahrens als besonders günstig erwiesen:

1.  Die Suspension des Pigments wird schwach sauer bis alkalisch gestellt; vorzugsweise arbeitet man im pH-Bereich 4 - 12, besonders bevorzugt 6 - 9. Dann werden in beliebiger Reihenfolge das anionische Dispergiermittel und das gelöste Polymerisat zugegeben.

2.  Zur sauren Pigmentsuspension (z.B. im Falle von Azopigmenten des Acetessigarylid-Typs, pH 4 - 5) werden in beliebiger Reihenfolge das anionische Dispergiermittel und die aus der Polymerherstellung erhaltene saure Polymersuspension (pH 2 - 5) gegeben. Dann wird die gesamte Mischung alkalisch (pH 7 - 9) gestellt.

3.  Das Polymerisat wird zunächst bei einem pH-Wert

Le A 20 823

zur Pigmentsuspension gegeben, bei dem es zumindest teilweise gelöst ist, danach durch Erhöhung des pH-Wertes gegebenenfalls vollständig in Lösung gebracht und anschließend durch Herabsetzen des pH-Wertes in Gegenwart der anionischen oberflächenaktiven Verbindung ausgefällt.

4. Die Pigmentsuspension wird vor oder nach der Zugabe des Polymerisats, jedoch vor dessen Ausfällung etwa 0,5 bis 4 h auf Temperaturen von 20 - 130°C erwärmt. Im einzelnen richten sich Zeit und Temperatur bei den erfindungsgemäßen Arbeitsweisen nach den gewünschten Eigenschaften der Pigment-Präparate wie Farbstärke, Deckfähigkeit oder Nuance.

Als Salze 2- oder 3-wertiger Metalle kommen anorganische und organische Salze in Betracht, insbesondere die Sulfate und/oder Chloride von Mg, Ca, Ba, Al, Fe, Co, Ni, Cu und Zn wie $MgCl_2$, $BaCl_2$, $AlCl_3$, $Al_2(SO_4)_3$, $FeCl_2$, $CoCl_2$, $NiCl_2$, $CuCl_2$ oder $ZnCl_2$. Bevorzugt eingesetzt werden $MgSO_4$ und $Al_2(SO_4)_3$, besonders bevorzugt $CaCl_2$. Als weitere Elektrolyte, die gegebenenfalls zugesetzt werden können, eignen sich insbesondere anorganische oder organische Säuren wie Ameisensäure, Pro-

Le A 20 823

pionsäure, Buttersäure, Maleinsäure, Fumarsäure und ganz besonders Essigsäure, Salzsäure, Salpetersäure, Schwefelsäure und Phosphorsäure.

Die Koagulation durch Elektrolytzusatz kann in der Kälte oder auch bei erhöhter Temperatur durchgeführt werden. Als besonders geeignet hat sich der Bereich zwischen etwa 20 und 80 °C erwiesen.

Wird zusätzlich Säure zur Koagulation verwendet, so hat es sich als vorteilhaft erwiesen, einen pH-Wert zwischen 6 und 1 einzustellen.

Die Erfindung betrifft weiterhin nach dem angegebenen Verfahren erhältliche Polymer-Pigment-Präparationen.

Gegenüber den entsprechenden Pulverpigmenten der Ausgangsware zeigen die Pigmentpräparationen gemäß der Erfindung eine verbesserte Dispergierbarkeit in alkalischen, wäßrigen Medien. Die alkalischen Medien können dabei rein wäßrig sein oder zusätzlich wassermischbare organische Lösungsmittel wie Ethanol, Ethylenglykol, Diethylenglykol enthalten. Die erfindungsgemäßen Pigmentpräparationen eignen sich vorteilhaft zur Pigmentierung von wäßrigen oder organischen Medien. Beispielsweise eignen sie sich zur Pigmentierung von wäßrigen oder wasserverdünnbaren Lacken, Anstrich- und Beschichtungsmitteln, wie Dispersionsanstrichfarben, zur Pigmentierung von wäßrigen Druckfarben,

Le A 20 823

beispielsweise Flexodruckfarben, von Tapetenfarben, ferner von Druckpasten für den Pigmentdruck auf Textilien.

Zur Pigmentierung werden die erfindungsgemäß hergestellten Produkte einzeln oder in Mischung den Druckfarben, Dispersionsanstrichfarben usw. in den jeweils üblichen Mengen zugesetzt. Es ist auch möglich, mehrere der erfindungsgemäß hergestellten Pigmentpräparate zu kombinieren oder eines oder mehrere der erfindungsgemäß hergestellten Pigmentpräparate mit mindestens einem als herkömmliches Pulverpigment oder als Pigmentpräparation vorliegenden organischen oder anorganischen Pigment zu kombinieren.

In den folgenden Beispielen finden folgende Polymerisate Verwendung:

Polymerisat 1: 43 % Butylacrylat, 17 % Acrylnitril,
40 % Methacrylsäure
Polymerisat 2: 43 % Butylacrylat, 17 % Acrylnitril,
40 % Acrylsäure
Polymerisat 3: 33 % Butylacrylat, 50 % Methacrylsäure,
17 % Styrol
Polymerisat 4: 43 % Butadien, 17 % Acrylnitril,
40 % Methacrylsäure
Polymerisat 5: 43 % Butylacrylat, 20 % Methacrylsäure,
37 % Acrylnitril.

Le A 20 823

Beispiel 1

In 1350 l einer wäßrigen Kupplungssuspension von C.I.
Pigment Yellow 1, die 74,0 kg Pigment enthält und nach
der Kupplung einen pH von ca. 3,0 hat, wird der pH-
Wert mit 60 l 40 %iger Natronlauge langsam auf 8,5 gestellt. Dann werden 20,1 kg Polymerisat 1 (36,8 %ige
wäßrige Dispersion) (10 % bezogen auf unbelegtes, trok-
kenes Pigment) in 180 l Wasser, mit 7,0 l 40 %iger Natronlauge gelöst, zugegeben. Es werden 5,6 kg Natriumdioctylsulfosuccinat in 50 l Wasser heiß gelöst zugegeben. Es wird 1 Stunde bei 60°C gerührt. Anschließend
wird innerhalb ca. 15 Min. mit 12 l Eisessig zunächst
auf pH 5,0, dann mit 90 l Salzsäure (19,5°Bé) auf pH 1
gestellt. Es werden 2,22 kg Calciumchlorid in 11,1 l
Wasser gelöst zugegeben. Es wird nach 20 Min. Nachrühren heiß abgesaugt und neutral gewaschen. Der erhaltene, zerkleinerte Preßkuchen kann so im Anwendungsmedium eingearbeitet oder bei 50°C getrocknet werden.

Beispiel 2

In 300 l einer wäßrigen Kupplungssuspension von C.I.
Pigment Yellow 74 (deckende Variante), die 28,0 kg
Pigment enthält und nach der Kupplung einen pH von
ca. 4,1 besitzt, wird der pH-Wert mit 18 l 40 %iger
Natronlauge langsam auf 8,5 gestellt. Es werden nacheinander 2,1 kg Natrium-dioctysulfosuccinat (in wenig
Wasser heiß gelöst) (7,5 % bezogen auf unbelegtes,

Le A 20 823

trockenes Pigment) und 15,19 kg Polymerisat 1 (36,8 %-ige wäßrige Dispersion) (20 % bezogen auf unbelegtes, trockenes Pigment) in 60 l Wasser mit 4 l 25 %igem Ammoniak gelöst und zugegeben. Es wird 1 Stunde bei 95°C gerührt. Es wird mit 18 l Eisessig innerhalb 15 Min. auf pH 5,0, dann mit 50 l Salzsäure (19,5°Bé) auf pH 1 gestellt. Es werden 838 g Calciumchlorid in 4,2 l Wasser gelöst zugegeben. Es wird nach 20 Minuten Nachrühren heiß abgesaugt und neutral gewaschen. Der erhaltene, zerkleinerte Preßkuchen kann so im Anwendungsmedium eingearbeitet oder bei 70°C getrocknet werden.

## Beispiel 3

680 l einer wäßrigen Kupplungssuspension von C.I. Pigment Yellow 83, die 30 kg Pigment enthält und nach der Kupplung einen pH-Wert von 4,0 hat, werden auf 85°C geheizt und 1 Stunde die Temperatur gehalten. Dann wird mit ca. 18 l 40 %iger Natronlauge langsam auf pH 8,5 gestellt. Es werden nacheinander 2,22 kg Natrium-dihexylsulfosuccinat (in wenig Wasser heiß gelöst) (7,5 % bezogen auf unbelegtes, trockenes Pigment) und 16,14 kg Polymerisat 2 (35 %ig) (20 % bezogen auf unbelegtes, trockenes Pigment) in 60 l Wasser, mit 2,0 - 2,5 l 40 %iger Natronlauge gelöst, zugegeben. Es wird 1 Stunde bei 85°C gerührt. Dann wird mit ca. 18 l Eisessig innerhalb ca. 15 Minuten zunächst auf pH 5,0, dann mit ca. 50 l Salzsäure, roh, 19,5°Bé, auf pH 1 gestellt. Es wird 20 Minuten bei 85°C nachge-

Le A 20 823

rührt. Dann werden 890 g Magnesiumchlorid in 4,5 l Wasser gelöst zugegeben. Es wird 20 Minuten nachgerührt und dann heiß abgepreßt und neutral gewaschen. Der erhaltene, zerkleinerte Preßkuchen kann so im Anwendungsmedium eingearbeitet oder bei 60°C getrocknet werden.

Beispiel 4

600 l einer wäßrigen Kupplungssuspension von C.I. Pigment Orange 34, die 24,0 kg Pigment enthält und nach der Kupplung einen pH-Wert von ca. 1,5 hat, wird auf 90°C geheizt und 1 Stunde gehalten. Der pH-Wert wird mit ca. 17 l 40 %iger Natronlauge langsam auf 8,5 gestellt. Es werden nacheinander 1,77 kg Di-Natrium-N-octadecylsulfosuccinamat (in wenig Wasser heiß gelöst) (7,5 % bezogen auf unbelegtes, trockenes Pigment) und 12,83 kg Polymerisat 3 (28 %ig) (20 % bezogen auf unbelegtes, trockenes Pigment), in 60 l Wasser mit 2 - 2,5 l 40 %iger Natronlauge gelöst, zugegeben. Es wird 1 Stunde bei 90°C gerührt. Es wird mit 4 l Eisessig innerhalb ca. 15 Minuten zunächst auf pH 5,0, dann mit ca. 23 l konz. Salzsäure (19,5°Bé) auf pH 1 gestellt. Es werden 708 g Bariumchlorid in 3,5 l Wasser gelöst zugegeben. Es wird 20 Minuten nachgerührt. Dann wird heiß abgepreßt und neutral gewaschen. Der erhaltene, zerkleinerte Preßkuchen kann so im Anwendungsmedium eingearbeitet oder bei 75°C getrocknet werden.

Le A 20 823

Beispiel 5

175 kg neutralgewaschener Preßkuchen von C.I. Pigment Red 112, der 35 kg Pigment enthält, werden in 500 l Wasser eingerührt. Nachdem das Pigment gleichmäßig verteilt ist, wird mit ca. 2 l 40 %iger Natronlauge langsam auf pH 8,5 gestellt. Es werden nacheinander 2,64 kg N-Dodecylbenzolsulfonat (in wenig Wasser heiß gelöst) (7,5 % bezogen auf unbelegtes, trockenes Pigment) und 19,09 kg Polymerisat 1 (36,8 %ig) (20 % bezogen auf unbelegtes, trockenes Pigment) in 60 l Wasser, mit 2,5 - 3 l 40 %iger Natronlauge, gelöst, zugegeben. Es wird 1 Stunde bei 60°C gerührt. Dann wird mit ca. 5 l Eisessig innerhalb ca. 15 Minuten zunächst auf pH 5,0, dann mit ca. 12 l Salzsäure, roh, 19,5°Bé, auf pH 1 gestellt. Es werden 1,06 kg Calciumchlorid in 5,3 l Wasser gelöst zugegeben. Es wird nach 20 Minuten Nachrühren heiß abgesaugt und neutral gewaschen. Der erhaltene, zerkleinerte Preßkuchen kann so im Anwendungsmedium eingearbeitet oder bei 50°C getrocknet werden.

Beispiel 6

10 g C.I. Pigment Blue 15 (ß-Kupferphthalocyanin) werden in 135 ml Schwefelsäure (66°Bé) bei 30°C gelöst. Anschließend wird die Lösung innerhalb 1 Stunde in 750 ml Wasser getropft. Das ausgefallene Pigment wird abgesaugt und neutral gewaschen. Der Preßkuchen wird in 100 ml Wasser angerührt. Die Suspension wird 1 Stun-

Le A 20 823

de bei 85°C gerührt. Der pH-Wert wird mit 40 %iger Natronlauge auf 8,5 gestellt. Es werden 1 g Natriumdioctylsulfosuccinat und 5,4 g Polymerisat 4 (30 %ig) in wenig Wasser mit 1 ml 40 %iger Natronlauge gelöst zugegeben. Es wird 1 Stunde bei 85°C gerührt. Es wird mit 18 %iger Salzsäure innerhalb ca. 30 Minuten auf pH 1 gestellt. Die Pigment-Polymer-Präparation wird abgesaugt, neutral gewaschen und bei 50°C getrocknet.

Beispiel 7

Es wird analog Beispiel 6 verfahren, lediglich nach der Zugabe der 18 %igen Salzsäure zur Fällung des Polymerisats werden 0,5 g $CaCl_2$ in 10 ml Wasser zur Fällung des Natriumdioctylsulfosuccinats zugegeben.

Beispiel 8

In eine Lösung von 1 g Natriumhydrogencarbonat in 52 ml Wasser werden 0,2 g Texapon Z (Natriumlaurylsulfat ($C_{12}$-$C_{14}$)), 3,0 g Natrium-dioctylsulfosuccinat und 69,5 g C.I. Pigment Green 7 zugegeben. Mit einem Schnellrührer wird innerhalb 1 Stunde eine homogene Suspension erzeugt. Dann wird mit 40 %iger Natronlauge auf pH 8,5 gestellt und 21,4 g Polymerisat 5 (36 %ig an Feststoff) in wenig Wasser mit 3,5 ml 40 %iger Natronlauge gelöst zugegeben. Innerhalb ca. 30 Minuten werden 32 ml Toluol zugetropft. Die Mischung wird 1 Stunde unter Rückfluß erhitzt (ca. 85 - 90°C). Es

Le A 20 823

wird auf 70°C abkühlen gelassen und mit 18 %iger Salzsäure auf pH 1 gestellt. Das Toluol wird durch Wasserdampfdestillation entfernt. Die Präparation wird abgesaugt, neutral gewaschen und bei 80°C getrocknet.

## Beispiel 9

Es wird analog Beispiel 8 verfahren, jedoch wird nach der Säurezugabe das Natriumdioctylsulfosuccinat durch Hinzufügen von 1,2 g $CaCl_2$ in 6 ml Wasser gefällt.

## Beispiel 10

10 g Ruß (z.B. Ruß Regal 400 R (Cabot)) werden in 100 ml Wasser in Gegenwart von 0,75 g Dibutylnaphthalinsulfonat 1 Stunde bei 85°C gerührt. Der pH-Wert wird mit 40 %iger Natronlauge auf 8,5 gestellt und 5,4 g Polymerisat 1 (36,8 % an Feststoff) in wenig Wasser mit 1 ml 40 %iger Natronlauge gelöst zugegeben. Es wird 1 Stunde bei 85°C gerührt. Dann wird mit Eisessig auf pH 5,0 und anschließend mit 18 %iger Salzsäure auf pH 1 gestellt. Die Pigment-Präparation wird abgesaugt, neutral gewaschen und bei 50°C getrocknet.

## Beispiel 11

Es wird analog Beispiel 10 verfahren, jedoch wird nach der Salzsäurezugabe das Dibutylnaphthalinsulfonat durch Hinzufügen von 0,5 g $CaCl_2$ in 5 ml Wasser gefällt.

Le A 20 823

Beispiel 12

In 300 l einer wäßrigen Kupplungssuspension von C.I. Pigment Yellow 74, die 28,0 kg Pigment enthält und nach der Kupplung einen pH von ca. 4,1 besitzt, werden 1,2 kg Tetra-Natrium-N-(1,2-dicarboxylethyl)-N-octadecyl-ethylsulfosuccinamat und 7,6 kg Polymerisat 2 (35 %ig) (10 % bezogen auf unbelegtes, trockenes Pigment) unter Rühren gegeben. Dann wird durch Zugabe von ca. 20 l 40 %iger Natronlauge der pH-Wert der Mischung langsam auf 8,5 gebracht. Es wird 1 Stunde bei 95°C gerührt. Anschließend wird mit ca. 60 l konz. Salzsäure (19,5°Bé) auf pH 1 gestellt. Es werden 840 g CaCl$_2$ in 4,2 l Wasser gelöst zugegeben. Es wird nach 20 Minuten Nachrühren heiß abgesaugt und neutral gewaschen. Der erhaltene, zerkleinerte Preßkuchen kann so im Anwendungsmedium eingearbeitet oder bei 70°C getrocknet werden.

Patentansprüche

1.  Verfahren zur Herstellung von Polymer-Pigment-Präparationen, dadurch gekennzeichnet, daß man die alkalische bis schwach saure, wäßrige Suspension eines Pigments in Gegenwart eines oder mehrerer saure Gruppen enthaltender, synthetischer Polymerisate und in Gegenwart von etwa 1 bis etwa 10 Gew.-%, bezogen auf das Pigmentgewicht, einer oder mehrerer anionischer oberflächenaktiver Verbindungen bei Temperaturen von etwa 20 bis etwa 130°C behandelt und durch Zugabe von Salzen 2- oder 3-wertiger Metalle und gegebenenfalls weiterer Elektrolyte, das Polymerisat und das Dispergiermittel fällt.

2.  Verfahren gemäß Anspruch 1, dadurch gekennzeichnet, daß man in Gegenwart von etwa 5 bis etwa 40 Gew.-%, bezogen auf das Pigmentgewicht, Polymerisat arbeitet.

3.  Verfahren gemäß den Ansprüchen 1 und 2, dadurch gekennzeichnet, daß die zugegebenen Polymerisate Carboxyl-, Carboxylat-, Sulfonsäure- oder Sulfonatgruppen enthalten.

4.  Verfahren gemäß den Ansprüchen 1 - 3, dadurch gekennzeichnet, daß man Copolymerisate mit mindestens einem Monomer aus der Reihe Acrylsäure, Methacrylsäure, Vinylsulfonsäure, Styrylsulfonsäu-

Le A 20 823

re, Maleinsäure, Maleinsäureanhydrid bzw. Halbester der Maleinsäure mit Monoalkoholen einsetzt.

5. Verfahren gemäß den Ansprüchen 1 bis 4, dadurch gekennzeichnet, daß man eine anionische oberflächenaktive Verbindung aus der Reihe Fettsäuresalze, Fettsäuresulfate, Sulfate von Fettsäureestern und Fettsäureamiden, Alkylsulfate, Sulfate von alkoxylierten Alkoholen, Sulfate von acylierten Alkanolaminen, $C_6-C_{20}$-Alkylsulfonate, Fettsäureestersulfonate, Fettsäureamidsulfonate, Sulfobernsteinsäureester- und amide, $(C_6-C_{20}$-Alkyl)-acyltauride, perfluorierte Alkylsulfonate, Alkylbenzolsulfonate, Alkylnaphthalinsulfonate, Arylethersulfonate, Alkylbenzimidazolsulfonate, Alkoxycarboxylate, Alkylmalonsäuresalze, Alkylbernsteinsäuresalze, Seifen einsetzt.

6. Verfahren gemäß den Ansprüchen 1 bis 5, dadurch gekennzeichnet, daß man in Gegenwart von 2 - 10 Gew.-%, bezogen auf das Pigmentgewicht an anionischer oberflächenaktiver Verbindung arbeitet.

7. Verfahren gemäß den Ansprüchen 1 - 6, dadurch gekennzeichnet, daß man das Polymerisat zunächst bei einem pH-Wert zugibt, bei dem es zumindest teilweise gelöst ist, es durch pH-Werterhöhung gegebenenfalls vollständig in Lösung bringt und anschließend das Polymerisat durch Herabsetzen des pH-Wertes in Gegenwart der anionischen, oberflächenaktiven Verbindung ausfällt.

0058865

8.  Verfahren gemäß den Ansprüchen 1 - 7, dadurch gekennzeichnet, daß man als Salz eines 2-wertigen Metalls Calciumchlorid einsetzt.

9.  Polymer-Pigment-Präparationen erhältlich nach den Verfahren der Ansprüche 1 bis 8.

10. Verwendung der Polymer-Pigment-Präparationen gemäß Anspruch 9 zum Pigmentieren von wäßrigen oder organischen Medien.

Le A 20 823